# EUROPEAN PATENT SPECIFICATION

(11) **EP 2 115 876 B1**
(45) Date of publication and mention of the grant of the patent: **14.09.2011**
(21) Application number: 08709762.2
(22) Date of filing: 05.02.2008
(51) Int. Cl.: H04B 1/034, H04B 1/38

(54) **RADIO-WAVE COMMUNICATION DEVICE INTERFACEABLE WITH THE AUDIO SYSTEM OF A VEHICLE**
FUNKWELLEN-KOMMUNIKATIONSEINRICHTUNG, DIE AN DAS AUDIOSYSTEM EINES FAHRZEUGS ANSCHALTBAR IST
DISPOSITIF DE COMMUNICATION PAR ONDES RADIO INTERFAÇABLE AVEC LE SYSTÈME AUDIO D'UN VÉHICULE

(30) Priority: 06.02.2007 IT MO20070040
(43) Date of publication of application: 11.11.2009
(73) Proprietor: Meta System S.p.A., 42100 Reggio Emilia (IT)
(72) Inventor: SIMONAZZI, Giuseppe, 42100 Reggio Emilia (IT)
(74) Representative: Brunacci, Marco
(86) International application number: PCT/IB2008/000247
(87) International publication number: WO 2008/096230

(56) References cited:
- EP-A- 0 982 885
- WO-A-2005/029826
- GB-A- 2 344 480
- US-A- 6 163 711

## Description

### Technical Field

The present invention relates to a radio-wave communication device interfaceable with the audio system of a vehicle.

### Background Art

The use is known of communication devices suitable for interfacing the audio system installed on a motor-vehicle with electronic apparatus located inside the compartment of the motor-vehicle itself, such as cell phones, digital audio players, etc.

With particular reference to the interfacing of cell phones, the use of such communication device, together with the use of a microphone arranged near the vehicle driver, allows listening to the telephone conversation by means of the vehicle audio system and, if necessary, controlling this by means of controls integrated in the steering wheel, with minimum distraction of the driver from driving.

The making of such communication devices is also known integrated with the vehicle electronics, at the time of manufacture of the vehicle itself.

Alternatively, the use is known of communication devices installable after the manufacture of the motor-vehicle and interfaceable with the existing audio system and, in particular, with the motor-vehicle radio.

Such communication devices generally comprise a radio-wave two-way radio module suitable for dialoguing with the above electronic apparatus by means of standard short-range transmission and reception protocols of the type, for example, complying with the Bluetooth^{®} industrial standard for PAN (Personal Area Network) type networks.

The two-way radio module is electronically associated with a module interfacing with the motor-vehicle audio system.

In particular, the interfacing module has one or more connection ports that can be connected by means of a plurality of power cables to corresponding audio signal input and control connectors arranged on the rear of the car radio.

These known communication devices do however have a number of drawbacks, including the inability to control additional information different from the audio signal coming, for example, from a cell phone, through the car radio connection. Another drawback is further represented by the complexity of the communication device installation process.

The presence of a plurality of power connecting cables and connectors between the interfacing module and the car radio does in fact, for installation, call for a basic technical know-how and implementation times that are not negligible.

The document WO 2005/029826 A discloses a handsfree kit for a mobile telephone which uses RDS signals for transferring calls to the loudspeaker of a car radio. The kit comprises an RDS generating circuit, an antenna output for connection to the antenna input of the car radio and an antenna input which is connected to an external antenna.

That handsfree kit however is also susceptible of improvements.

### Object of the Invention

The main aim of the present invention is to identify a radio-frequency communication device that permits interfacing electronic apparatus of different types to the audio system of a vehicle while at the same time ensuring the control of a greater amount of information with respect to currently-known devices.

As part of this technical aim, another object of the present invention is to make easier the installation and interfacing of the communication device with the vehicle audio system.

Another object of the present invention is to provide a radio-wave communication device interfaceable with the audio system of a vehicle that allows to overcome the mentioned drawbacks of the known technique within the ambit of a simple and rational solution, which is easy and effective to use, as well as having a fairly low cost.

The above objects are all achieved by the present radio-wave communication device interfaceable with the audio system of a vehicle, comprising a two-way radio module suitable for receiving and/or transmitting a radio-wave signal from/to at least one electronic apparatus and an interfacing module associated with said two-way radio module and associable with a car radio connected to the audio system of a vehicle, characterized in that said said interfacing module comprises at least one electronic connection port associable at the input antenna of said car radio by interposition of electronic connecting means.

### Brief Description of the Drawings

Further characteristics and advantages of the present invention will appear more evident from the description of a preferred, but not exclusive, embodiment of a radio-wave communication device interfaceable with the audio system of a vehicle, illustrated indicatively by way of non limiting example in the accompanying drawings, wherein:

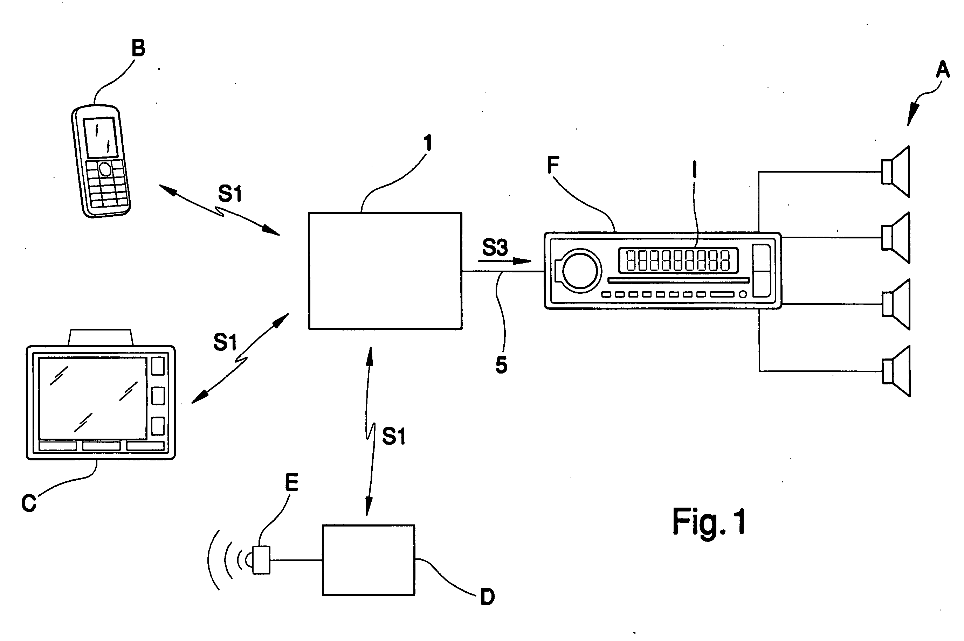

figure 1 is a general schematic view that shows the application of the communication device according to the invention to the audio system of a motor-vehicle;
figure 2 is a general schematic view that shows a possible embodiment of the communication device according to the invention.

### Embodiments of the Invention

With particular reference to these illustrations, reference numeral 1 globally designates a radio-wave communication device that can be interfaced with the audio system of a vehicle and which is suitable for communicating with one or more electronic appliances located in the vicinity.

In particular, the communication device 1 can be interfaced with the audio system A of a motor-vehicle and the above electronic appliances can be located inside the vehicle compartment and can be made up, for example, of a cell phone B, of a satellite signal receiver C or of an electronic unit for controlling a plurality of distance sensors installed on the motor-vehicle and suitable for parking assistance.

The use cannot however be ruled out of the communication device 1 being combined with different types of electronic appliances.

The communication device 1 comprises a two-way radio module 2 suitable for receiving and/or transmitting a radio-wave signal S1 from/to one or more electronic devices positioned inside the motor-vehicle compartment.

The communication device 1 also comprises an interfacing module 3 electronically associated with the two-way radio module 2 and electronically associable with a car radio F connected to the audio system A of the motor-vehicle.

In particular, the two-way radio module 2 comprises a short-range, (10 metres to 100 metres), low-consumption two-way radio, of the type complying with the Bluetooth^{®} industrial standard. The radio-wave signal S1 transmitted and/or received according to the Bluetooth^{®} standards has a frequency of 2.45 GHz. The two-way radio module 2 comprises a transducer circuit, not shown in the above illustrations, being of the conventionally used type, suitable for converting the radio-wave signal S1 received into a corresponding electric signal S2 subsequently sent to the interfacing module 3.

In the case in which, for example, the electronic appliance is of the type of a cell phone, the radio-wave signal S 1 received and the corresponding converted electric signal S2 comprise the audio signal received from the cell phone. Similarly, the transducer circuit can be used to convert an electric input signal S2 into a corresponding radio-wave signal S1 subsequently transmitted by means of the short-range two-way radio.

The interfacing module 3 comprises a modulation circuit for modulating the electric signal S2 converted from the two-way radio module 2 into a modulated output signal S3.

In particular, the above modulation circuit can comprise a frequency modulator operating in the frequencies normally used for radio broadcasting (from 87.5 MHz to 108 MHz).

The modulation frequency can be predefined or, advantageously, can be determined by the communication device 1.

Alternatively, the modulation circuit can comprise an amplitude modulator operating in the frequencies normally used for radio broadcasting (from 540 KHz to 1600 KHz).

Advantageously, the interfacing module 3 comprises an electronic connection port 4 associable with the input antenna G of the car radio F by interposition of electronic connection means 5.

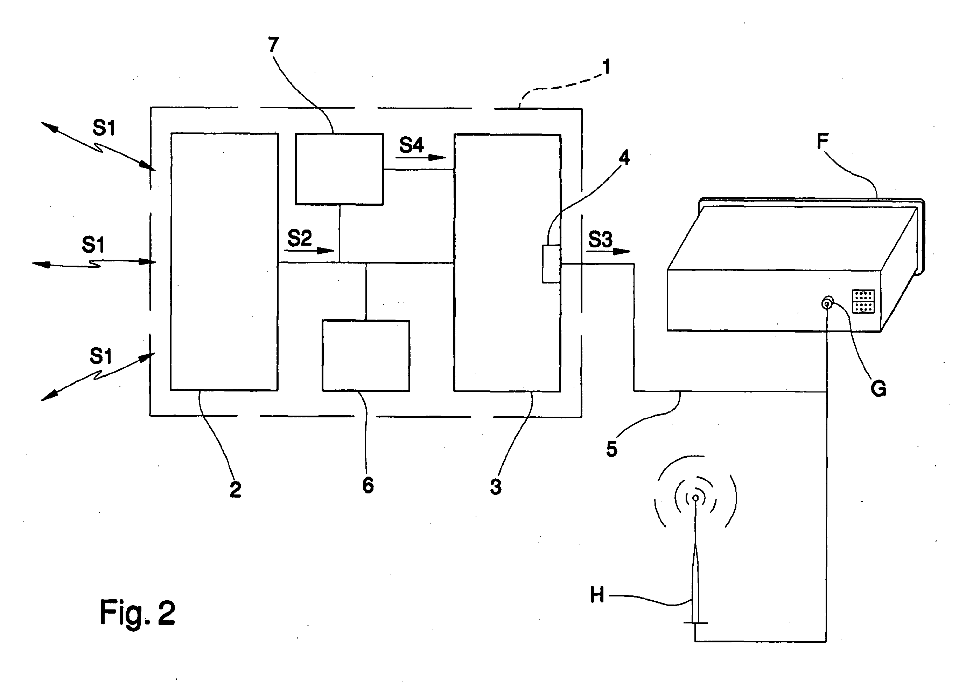

It must be pointed out that with the wording "antenna input" is meant the input connector of a car radio F, shown in figure 2 with the reference G, which, normally, is connected to a radio-frequency receiver antenna H installed on a vehicle.

The electronic connection means 5 are made up of a power cable having a first connector associable with the connection port and a second connector of the RF (radio-frequency) type associable with the input antenna G of the car radio F. Advantageously, the electronic connection means 5 can entail the use of a bypass type connector associated with the input antenna G and suitable for allowing the simultaneous connection of the receiver antenna H of the vehicle. Usefully, the communication device 1 comprises a processing and control unit 6, of the type of a microprocessor or the like, associated with the two-way radio module 2 and the interfacing module 3.

The processing and control unit 6 is suitable for controlling the functions of the communication device 1 such as, for example, the determination and setting of the modulation frequencies of the interfacing module 3.

The communication device 1 further comprises a generation unit 7 for generating control signals of the RDS (Radio Data System) type, shown in figure 2 by the reference number S4.

In particular, the generation unit 7 is suitable for processing one or more control signals S4 starting with the converted electric signal S2.

Usefully, the processed control signals S4 are transmitted to the interfacing module 3 and are modulated together with the converted electric signal S2 to obtain the modulated signal S3 subsequently sent to the car radio F.

In particular, the control signals S4 thus processed comprise information that can be displayed by means of the conventional display unit I of the car radio F. Such information can comprise, for example, road signs or information on road conditions in case of interfacing with a satellite receiver C, parking assistance instructions in case of interfacing with an electronic unit D for controlling a plurality of distance and/or position sensors E or, furthermore, descriptive information of a telephone communication (name of caller, call duration and cost) in case of interfacing with a cell phone B.

Interfacing cannot however be ruled out by means of the communication device 1 of different types of electronic appliances and/or the control and display by means of the display unit I of information different to that indicated above. Advantageously, the processing and control unit 6 and the generation unit 7 can coincide.

The communication device 1 can comprise an electric power supply port associable with an external power line, for example connected to the motor-vehicle battery; alternatively, the communication device 1 can have an independent power supply generated, for example, by an internal power battery of the type conventionally used.

It has in point of fact be ascertained how the described invention achieves the proposed objects, and in particular the fact is underlined that the possibility of controlling the car radio display unit permits the control of a larger amount of information and therefore a more complete communication between the electronic appliance and the motor-vehicle driver.

Another advantage is represented by the possibility of connecting the communication device directly to the input antenna of the car radio by means of the use of a single cable.

The use of a single cable instead of the plurality of cables and relative connectors commonly used does in fact allow simplifying and cutting the installation times of the communication device.

The invention thus conceived is susceptible to numerous modifications and variations, all of which falling within the scope of the inventive concept. Furthermore all the details can be replaced with others that are technically equivalent.

In practice, the materials used, as well as the contingent shapes and dimensions, may be any according to requirements without because of this moving outside the protection scope of the following claims.

## Claims

1. Radio-wave communication device (1) interfaceable with the audio system of a vehicle, comprising a radio module (2) and an interfacing module (3) connected with said radio module (2) and connectable with a car radio (F) connected to the audio system (A) of a vehicle, wherein said interfacing module (3) comprises at least one electronic connection port (4) connectable at the antenna, input (G) of said car radio (F) by insertion of electronic connecting means (5), and said radio module (2) comprises at least one transducer circuit of radio-wave signals (S1) received from at least two electronic devices (B, C, D) of different type located inside the vehicle compartment into corresponding electric signals (S2), or vice versa, **characterized in that** said at least two electronic devices (B, C, D) can be selected from the group comprising:
- a cell phone (B);
- a satellite signal receiver (C);
- an electronic unit (D) for controlling a plurality of distance and/or position sensors (E) installed on the motor-vehicle and suitable for parking assistance;
and **in that** the device (1) comprises a generation unit (7) for generating at least one control signal (S4) of the RDS (Radio Data System) type, starting with said converted electric signals (S2), said control signal (S4) comprising information that can be displayed on the display unit (I) of said car radio (F), wherein said information of the control signal (S4) can be selected from the group comprising:
- descriptive information of a telephone communication in the case of at least one of said electronic devices (B, C, D) is a cell phone (B);
- road signs or information on road conditions in the case of at least one of said electronic devices (B, C, D) is a satellite signal receiver (C);
- parking assistance instructions in the case of at least one of said electronic devices (B, C, D) is an electronic unit (D) for controlling a plurality of distance and/or position sensors (E).

2. Device (1) according to claim 1, **characterized in that** said radio module (2) comprises a short-range two-way radio.

3. Device (1) according to claim 2, **characterized in that** said two-way radio module (2) is of the type complying with the Bluetooth^{®} industrial standard or the like.

4. Device (1) according to one or more of the preceding claims, **characterized in that** said interfacing module (3) comprises at least one modulation circuit for modulating said electric signal (S2) converted into at least one modulated output signal (S3).

5. Device (1) according to claim 4, **characterized in that** said modulation circuit comprises at least one frequency modulator.

6. Device (1) according to claim 4, **characterized in that** said modulation circuit comprises at least one amplitude modulator.

7. Device (1) according to one or more of the preceding claims, **characterized in that** it comprises at least one processing and control unit (6) connected with at least one of either said radio module (2) or said interfacing module (3).

8. Device (1) according to claim 7, **characterized in that** said processing and control unit (6) is of the type of a microprocessor or the like.

9. Device (1) according to claim 7, **characterized in that** said processing and control unit (6) and said generation unit of a RDS signal coincide.

10. Device (1) according to one or more of the preceding claims, **characterized in that** said electronic connection means (5) comprise at least one power cable (5) having a first connector connectable with said connection port (4) and a second connector connectable with the antenna input (G)of said car radio (F).

11. Device (1) according to one or more of the preceding claims, **characterized in that** said electronic connection means (5) comprise at least one connector for allowing the simultaneous connection of the receiver antenna (H) of the vehicle.

12. Device (1) according to one or more of the preceding claims, **characterized in that** it comprises at least one power supply port associable with an external power line.

13. Device (1) according to one or more of the preceding claims, **characterized in that** it comprises at least one power supply port connectable with an internal power battery.

## Patentansprüche

1. Funkwellen-Kommunikationsvorrichtung (1), die mit dem Audiosystem eines Fahrzeugs eine Schnittstelle bilden kann und ein Funkmodul (2) sowie ein mit dem Funkmodul (2) verbundenes Schnittstellenmodul (3), das mit einem mit dem Audiosystem (A) eines Fahrzeugs verbundenen Autoradios (F) verbunden werden kann, umfasst, wobei das Schnittstellenmodul wenigstens einen elektronischen Verbindungsanschluss (4), der an den Antenneneingang (G) des Autoradios (F) durch Einsetzen elektronischer Verbindungsmittel (5) angeschlossen werden kann, umfasst und das Funkmodul (2) wenigstens eine Wandlerschaltung umfasst, um Funkwellensignale (S1), die von wenigstens zwei elektronischen Vorrichtungen (B, C, D) unterschiedlichen Typs, die sich in dem Fahrzeugraum befinden, empfangen werden, in entsprechende elektrische Signale (S2) umzusetzen oder umgekehrt, **dadurch gekennzeichnet, dass** die wenigstens zwei elektronischen Vorrichtungen (B, C, D) aus der Gruppe gewählt werden können, die umfasst:
- ein Zellentelephon (B);
- einen Satellitensignalempfänger (C);
- eine elektronische Einheit (D) zum Steuern mehrerer Abstands- und/oder Positionssensoren (E), die in dem Kraftfahrzeug installiert sind und für eine Parkassistenz geeignet sind;
und dass die Vorrichtung (1) eine Erzeugungseinheit (7) zum Erzeugen wenigstens eines Steuersignals (S4) des RDS-Typs ("Radio Data System"-Typ) umfasst, die von den umgesetzten elektrischen Signalen (S2) ausgeht, wobei das Steuersignal (S4) Informationen enthält, die auf der Anzeigeeinheit (I) des Autoradios (F) angezeigt werden können, wobei die Informationen des Steuersignals (S4) aus der Gruppe gewählt werden können, die umfasst:
- beschreibende Informationen einer Telephonkommunikation in dem Fall, dass wenigstens eine der elektronischen Vorrichtungen (B, C, D) ein Zellentelephon (B) ist;
- Verkehrszeichen oder Informationen über Verkehrsbedingungen in dem Fall, dass wenigstens eine der elektronischen Vorrichtungen (B, C, D) ein Satellitensignalempfänger (C) ist;
- Parkassistenzbefehle in dem Fall, dass wenigstens eine der elektronischen Vorrichtungen (B, C, D) eine elektronische Einheit (D) zum Steuern mehrerer Abstands- und/oder Positionssensoren (E) ist.

2. Vorrichtung (1) nach Anspruch 1, **dadurch gekennzeichnet, dass** das Funkmodul (2) einen kurzreichweitigen Zweiwegefunk umfasst.

3. Vorrichtung (1) nach Anspruch 2, **dadurch gekennzeichnet, dass** das Zweiwege-Funkmodul (2) von dem Typ ist, der die Bluetooth®-Industrienorm oder dergleichen verfüllt.

4. Vorrichtung (1) nach einem oder mehreren der vorhergehenden Ansprüche, **dadurch gekennzeichnet, dass** das Schnittstellenmodul (3) wenigstens eine Modulationsschaltung zum Modulieren des elektrischen Signals (S2), das in wenigstens ein moduliertes Ausgangssignal (S3) umgesetzt wird, umfasst.

5. Vorrichtung (1) nach Anspruch 4, **dadurch gekennzeichnet, dass** die Modulationsschaltung wenigstens einen Frequenzmodulator umfasst.

6. Vorrichtung (1) nach Anspruch 4, **dadurch gekennzeichnet, dass** die Modulationsschaltung wenigstens einen Amplitudenmodulator umfasst.

7. Vorrichtung (1) nach einem oder mehreren der vorhergehenden Ansprüche, **dadurch gekennzeichnet, dass** sie wenigstens eine Verarbeitungs- und Steuereinheit (6) umfasst, die mit dem Funkmodul (2) und/oder dem Schnittstellenmodul (3) verbunden ist.

8. Vorrichtung (1) nach Anspruch 7, **dadurch gekennzeichnet, dass** die Verarbeitungs- und Steuereinheit (6) vom Typ eines Mikroprozessors oder dergleichen ist.

9. Vorrichtung (1) nach Anspruch 7, **dadurch gekennzeichnet, dass** die Verarbeitungs- und Steuereinheit (6) und die Erzeugungseinheit für ein RDS-Signal übereinstimmen.

10. Vorrichtung (1) nach einem oder mehreren der vorhergehenden Ansprüche, **dadurch gekennzeichnet, dass** die elektronischen Verbindungsmittel (5) wenigstens ein Leistungskabel (5) umfassen, das einen ersten Verbinder, der mit dem Verbindungsanschluss (4) verbunden werden kann, und einen zweiten Verbinder, der mit dem Antenneneingang (G) des Autoradios (F) verbunden werden kann, besitz.

11. Vorrichtung (1) nach einem oder mehreren der vorhergehenden Ansprüche, **dadurch gekennzeichnet, dass** die elektronischen Verbindungsmittel (5) wenigstens einen Verbinder umfassen, um die gleichzeitige Verbindung der Empfängerantenne (H) des Fahrzeugs zu ermöglichten.

12. Vorrichtung (1) nach einem oder mehreren der vorhergehenden Ansprüche, **dadurch gekennzeichnet, dass** sie wenigstens einen Leistungsversorgungsanschluss umfasst, der einer externen Netzleitung zugeordnet
werden kann.

13. Vorrichtung (1) nach einem oder mehreren der vorhergehenden Ansprüche, **dadurch gekennzeichnet, dass** sie wenigstens einen Leistungsversorgungsanschluss umfasst, der mit einer internen Leistungsbatterie verbunden, werden kann.

## Revendications

1. Dispositif (1) de communication à ondes radio interfaçable avec le système audio d'un véhicule, comprenant un module radio (2) et un module d'interfaçage (3) connecté avec ledit module radio (2) et connectable avec une autoradio (F) connectée au système audio (A) d'un véhicule, où ledit module d'interfaçage (3) comprend au moins un port de connexion (4) électronique connectable à l'entrée de l'antenne (G) de ladite autoradio (F) par l'interposition de moyens électroniques de connexion (5), et ledit module radio (2) comprend au moins un circuit transducteur des signaux à radio-onde (S1) reçus par au moins deux dispositifs électroniques (B, C, D) de types différents placés à l'intérieur du compartiment du véhicule, en des signaux électroniques (S2) correspondants, ou vice versa, **caractérisé en ce que** lesdits au moins deux dispositifs électroniques (B, C, D) peuvent être sélectionnés parmi le groupe comprenant:
- un téléphone cellulaire (B) ;
- un récepteur de signaux satellite (C) ;
- un unité électronique (D) pour contrôler une pluralité de capteurs (E) à distance et / ou de position installés sur le véhicule et aptes à l'assistance au parking ;
et **en ce que** le dispositif (1) comprend une unité de génération (7) pour générer au moins un signal de contrôle (S4) du type RDS (Radio Data System), à partir desdits signaux électronique (S2) convertis, ledit signal de contrôle (S4) comprenant des informations qui peuvent être affichées sur l'unité d'affichage (I) de ladite autoradio (F), où lesdites informations du signal de contrôle (S4) peuvent être sélectionnées parmi le groupe comprenant :
- des informations descriptives d'une communication téléphonique dans le cas où au moins un desdits dispositifs électroniques (B, C, D) est un téléphone cellulaire (B) ;
- des signaux sur la route ou sur des informations sur les conditions de la route dans le cas où un desdits dispositifs électroniques (B, C, D) est un récepteur de signaux satellite (C) ;
- des instructions d'assistance au parking dans le cas où un desdits dispositifs électroniques (B, C, D) est une unité électronique (D) pour contrôler une pluralité de capteurs (E) à distance et / ou de position.

2. Dispositif (1) selon la revendication 1, **caractérisé en ce que** ledit module radio (2) comprend un module radio à courte portée dans les deux sens.

3. Dispositif (1) selon la revendication 2, **caractérisé en ce que** ledit module radio (2) est du type conforme au standard industriel Bluetooth® ou similaire.

4. Dispositif (1) selon l'une ou plusieurs des revendications précédentes, **caractérisé en ce que** ledit module d'interfaçage (3) comprend au moins un circuit de modulation pour moduler ledit signal électronique (S2) converti en au moins un signal de sortie (S3) modulé.

5. Dispositif (1) selon la revendication 4, **caractérisé en ce que** ledit circuit de modulation comprend au moins un modulateur de fréquence.

6. Dispositif (1) selon la revendication 4, **caractérisé en ce que** ledit circuit de modulation comprend au moins un modulateur d'amplitude.

7. Dispositif (1) selon l'une ou plusieurs des revendications précédentes, **caractérisé en ce qu'**il comprend au moins une unité de traitement et de contrôle (6) associée à au moins un entre ledit module radio (2) ou ledit module d'interfaçage (3).

8. Dispositif (1) selon la revendication 7, **caractérisé en ce que** ladite unité de traitement et de contrôle (6) est du type microprocesseur ou similaire.

9. Dispositif (1) selon la revendication 7, **caractérisé en ce que** ladite unité de traitement et de contrôle (6) et ladite unité de génération d'un signal RDS coïncident.

10. Dispositif (1) selon l'une ou plusieurs des revendications précédentes, **caractérisé en ce que** lesdits moyens de connexion (5) comprennent au moins un câble d'alimentation (5) ayant un premier connecteur connectable audit port de connexion (4) et un deuxième connecteur connectable à l'entrée de l'antenne (G) de ladite autoradio (F).

11. Dispositif (1) selon l'une ou plusieurs des revendications précédentes, **caractérisé en ce que** lesdits moyens de connexion (5) comprennent au moins un connecteur pour permettre la connexion simultanée de l'antenne de réception (H) du véhicule.

12. Dispositif (1) selon l'une ou plusieurs des revendications précédentes, **caractérisé en ce qu'**il comprend au moins un port d'alimentation électrique associable avec une ligne d'alimentation externe.

13. Dispositif (1) selon l'une ou plusieurs des revendications précédentes, **caractérisé en ce qu'**il comprend au moins un port d'alimentation électrique connectable avec une batterie d'alimentation interne.
